# EUROPÄISCHE PATENTANMELDUNG

(11) **EP 2 803 587 A1**
(43) Veröffentlichungstag der Anmeldung: **19.11.2014**
(21) Anmeldenummer: 13002636.2
(22) Anmeldetag: 18.05.2013
(51) Int. Cl.: B64F 1/30

(54) **Fluggasttreppe oder -brücke mit einem stirnseitig angeordneten, etwa U-förmigen Portalrahmen zur Aufnahme eines Vordaches**

(71) Anmelder: Hübner GmbH & Co. KG, 34123 Kassel (DE)
(72) Erfinder: Fülling, Jürgen, 34388 Trendelburg (DE); Karasek, Jens, 34260 Kaufungen (DE); Schuster, Heinz, 34123 Kassel (DE)
(74) Vertreter: Walther, Walther & Hinz GbR

(57) **Zusammenfassung**

Gegenstand der Erfindung ist eine Fluggasttreppe oder Fluggastbrücke (1) mit einem stirnseitig an der Fluggasttreppe oder -brücke (1) angeordneten, in der Ansicht etwa U-förmigen Portalrahmen (3) zur Aufnahme eines Vordaches (10), wobei das Vordach mindestens einen Balg (5) und eine Betätigungseinrichtung (9) für den Balg umfasst, wobei zur Verbindung mindestens der Betätigungseinrichtung (9) des Vordaches (10) mit dem Portalrahmen (3) am Portalrahmen (3) eine Adaptereinrichtung angeordnet ist.

## Beschreibung

Gegenstand der Erfindung ist eine Fluggasttreppe oder -brücke mit einem stirnseitig an der Fluggasttreppe oder -brücke angeordneten, in der Ansicht etwa U-förmigen Portalrahmen zur Aufnahme eines Vordaches, wobei das Vordach mindestens einen Balg und eine Betätigungseinrichtung für den Balg umfasst.

Derartige Fluggasttreppen oder Fluggastbrücken sind bekannt. Fluggasttreppen oder -brücken weisen an ihrem freien stirnseitigen Ende üblicherweise ein sogenanntes Faltenvordach auf, wobei durch das Faltenvordach der Abstand zwischen der Fluggastbrücke oder -treppe und dem Rumpf des Flugzeugs überbrückt wird. Das heißt, dass durch das Vordach ein Übergangsschutz zwischen Fluggasttreppe oder -brücke einerseits und dem Flugzeug andererseits gebildet wird.

Ein solches Vordach ist aus der DE 10 2004 016 272 B4 bekannt. Das Vordach umfasst zwei in horizontaler Richtung beabstandet zueinander angeordnete Gelenkarme, die an dem in der Ansicht in etwa U-förmigen Portalrahmen der Fluggasttreppe oder -brücke gelenkig angeordnet sind. Unterhalb der gelenkigen Anordnung der beiden Gelenkarme an dem Portalrahmen der Fluggasttreppe oder -brücke befindet sich jeweils eine zweite Gelenkverbindung zur Aufnahme eines Kolbenzylinderantriebes, insbesondere einer Gasdruckfeder, die mit dem Gelenkarm gelenkig verbunden ist und durch die die Ausstellbewegung des jeweiligen Gelenkarmes bewirkt wird. Die Gelenkarme selbst besitzen an ihrem vorderen freien Ende einen flexiblen U-förmigen Rahmen, wobei der U-förmige Rahmen einen sogenannten Bumper aufweist, mit dem sich der Rahmen an die Außenhaut des Flugzeugs im Bereich der Zugangsöffnung anlegt. Zur Kontrolle der Ausstellbewegung ist ein Antrieb vorgesehen. Solch ein Antrieb umfasst zwei Rollen, wobei jeweils eine Rolle oberhalb des jeweiligen Gelenkarmes am Portalrahmen befestigt ist. Eine solche Rolle dient der Aufnahme eines Zugmittels, z. B. eines Seiles oder eines Gurtes, wobei das Ende des Seiles oder des Gurtes mit dem Ende des Gelenkarmes im Bereich des U-förmigen Rahmens mit dem Bumper verbunden ist. Die beiden beabstandet zueinander angeordneten Rollen sind durch eine Welle miteinander verbunden, wobei die Welle motorisch angetrieben ist, beispielsweise durch einen Rohrmotor. Zwischen dem stirnseitigen U-förmigen Rahmen und dem Portalrahmen der Fluggasttreppe oder -brücke ist ein gleichfalls U-förmig umlaufendes Faltendach vorgesehen.

Fluggastbrücken und Fluggasttreppen werden von den unterschiedlichsten Herstellern angeboten. Die Portalrahmen der einzelnen Fluggasttreppen oder Fluggastbrücken sind hierbei so ausgestaltet, dass nicht an jedem beliebigen Punkt die Anbindung für den Gelenkarm bzw. den Kolbenzylinderantrieb oder auch die Befestigung der Rolle oberhalb des Gelenkarmes vorgenommen werden kann. Das heißt, die Vervollständigung einer Fluggasttreppe oder Fluggastbrücke mit dem entsprechenden Vordach bedingt herstellerabhängig immer einen erheblichen konstruktiven aber auch einbautechnischen Aufwand. Der Grund hierfür liegt darin, dass, wie bereits ausgeführt, für jede Fluggastbrücke oder Fluggasttreppe eines jeden Herstellers zunächst ermittelt werden muss, an welchen Punkten die Anlenkung der zuvor beschriebenen Bauteile erfolgen kann, um dann die Geometrie, das heißt die Zuordnung der Teile so zu gestalten, dass ein solches Vordach auch funktionsfähig ist.

Das Vordach umfasst hierbei eine Betätigungseinrichtung und einen in der Ansicht U-förmigen Balg als Falten- oder Wellenbalg. Die Betätigungseinrichtung umfasst weiterhin die beiden Gelenkarme mit den entsprechenden Kolbenzylinderantrieben, die vorzugsweise als Gasdruckfedern ausgebildet sind. Die Kolbenzylinderantriebe sorgen für die Ausstellbewegung des Vordachs bzw. der Betätigungseinrichtung.

Die der Erfindung zugrunde liegende Aufgabe besteht darin, Abhilfe in Bezug auf die oben genannten Nachteile zu schaffen. Insbesondere ist Ziel der Erfindung unabhängig vom Hersteller und unabhängig von der jeweils mit einem Vordach auszubildenden Fluggasttreppe oder Fluggastbrücke ein vorkonfektioniertes Vordach anbauen zu können.

Zur Lösung der Aufgabe wird erfindungsgemäß vorgeschlagen, dass zur Verbindung mindestens der Betätigungseinrichtung des Vordachs mit dem Portalrahmen am Portalrahmen eine Adaptereinrichtung angeordnet ist. Das heißt, dass das Vordach portalrahmenseitig über eine Adaptereinrichtung verfügt, durch die ermöglicht wird, das Vordach an dem Portalrahmen zu befestigen. Denn dann ist es nur noch erforderlich, dass die entsprechenden Bohrungen an der Adaptereinrichtung vorgenommen werden, um diese durch Schrauben oder Nieten mit dem Portalrahmen der Fluggasttreppe oder Fluggastbrücke zu verbinden.

Vorteilhafte Merkmale und Ausgestaltungen der Erfindung ergeben sich aus den Unteransprüchen.

So ist nach einer besonders vorteilhaften Ausgestaltung vorgesehen, dass die Adaptereinrichtung mindestens zwei Träger umfasst, wobei jeweils mindestens ein Träger an einem im Einbauzustand vertikal ausgerichteten Schenkel des in der Ansicht in etwa U-förmigen Portalrahmens angeordnet ist. Hieraus wird deutlich, dass das Vordach lediglich mit zwei Trägern ausgestattet ist, mithilfe derer das Vordach insgesamt am Portalrahmen befestigt wird.

Nach einem weiteren Merkmal der Erfindung weist der Träger, der vorteilhaft im Querschnitt in etwa U-förmig ausgebildet ist, übereinander angeordnet mindestens eine erste und eine zweite Gelenkachse auf, wobei an der einen ersten unteren Gelenkachse ein unterer Kolbenzylinderantrieb für den Gelenkarm und an der einen zweiten oberen Gelenkachse ein Gelenkarm der Betätigungseinrichtung des Vordaches angeordnet ist. Das heißt, im Bereich der Schenkel des im Querschnitt U-förmigen Trägers befinden sich Augen zur Aufnahme der Gelenkachsen für Gelenkarm und unteren Kolbenzylinderantrieb, z. B. eine Gasdruckfeder. Eine gelenkige Verbindung ist erforderlich, da sowohl der Gelenkarm als auch der untere Kolbenzylinderantrieb beim Ausfahren des Gelenkarmes verschwenken.

Nach einem weiteren Merkmal der Erfindung ist vorgesehen, dass der Träger oberhalb der ersten oberen Gelenkachse eine Rolle für ein Zugmittel, z. B. ein Seil oder einen Gurt als Teil des Antriebs für die Gelenkarme aufweist. Durch die Kolbenzylinderantriebe, die insbesondere als Gasdruckfedern ausgebildet sind, stehen die Gelenkarme unter Druck. Die den beiden Gelenkarmen zugeordneten Rollen sind nach einem weiteren Merkmal der Erfindung durch eine Welle, die insbesondere motorisch angetrieben ist, beispielsweise durch einen Rohrmotor miteinander verbunden. Durch den Rohrmotor werden die Rollen in Drehung versetzt, mithin das Zugmittel, z. B. ein Gurt von der jeweiligen Rolle auf- oder abgerollt wird, und hierbei die Aus- und Einfahrbewegung des Vordachs kontrolliert. Das Prinzip ist aus der bereits zitierten DE 10 2004 016 272 B4 hinreichend bekannt. Alternativ besteht natürlich auch die Möglichkeit die Rollen einzeln anzutreiben.

Anhand der Zeichnungen wird die Erfindung nachstehend beispielhaft näher erläutert.
- Fig. 1: zeigt angedeutet die Fluggasttreppe oder Fluggastbrücke mit dem stirnseitigen Portalrahmen sowie dem Vordach in einer schematischen Darstellung, wobei der Balg zwischen flexiblen Rahmen und Portalrahmen lediglich angedeutet ist;
- Fig. 2: zeigt den Träger mit Gelenkarm, Kolbenzylinderantrieb sowie Rollen in einer Seitenansicht;
- Fig. 3: zeigt einen Schnitt durch den Träger im Bereich der Gelenkachse für den Kolbenzylinderantrieb,
- Fig. 4: zeigt einen Schnitt durch den Träger im Bereich der Gelenkachse für den Gelenkarm.

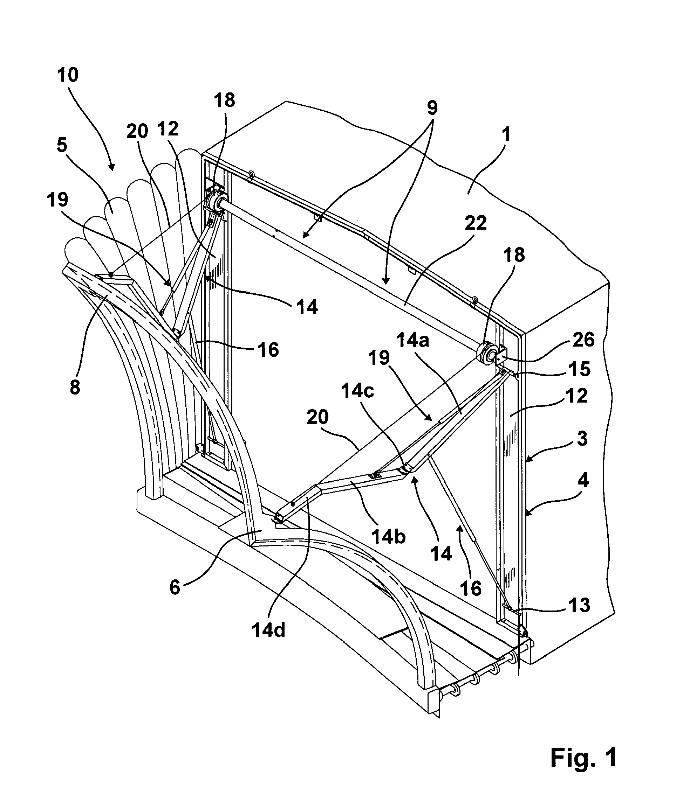

Aus der schematischen Darstellung gemäß Fig. 1 ergibt sich mit dem Bezugszeichen 1 die angedeutete Fluggasttreppe oder Fluggastbrücke, die stirnseitig den in der Ansicht etwa U-förmigen Portalrahmen 3 aufweist. An dem Portalrahmen 3 befindet sich das insgesamt mit 10 bezeichnete Vordach, wobei der Balg 5 des Vordachs der besseren Übersichtlichkeit wegen, nur angedeutet worden ist. Das Vordach umfasst neben dem Balg 5 die insgesamt mit 9 bezeichnete Betätigungseinrichtung. Die Betätigungseinrichtung 9 umfasst u.a. die beiden Gelenkarme 14 und die beiden unteren Kolbenzylinderantriebe 16. Zur Verbindung des Vordaches 10 mit dem Portalrahmen 3 sind an den senkrechten Schenkeln 4 des in der Ansicht U-förmigen Portalrahmens 3 jeweils ein Träger 12 angeordnet. An dem Träger 12 ist sowohl der Gelenkarm 14 als auch der untere Kolbenzylinderantrieb 16 mithilfe jeweils einer Gelenkachse schwenkbeweglich gelagert. Darüber hinaus befindet sich oberhalb der Anlenkung des Gelenkarmes 14 an dem Träger 12 eine Rolle 18 zur Aufnahme eines Zugmittels 20, z. B. eines Seils oder eines Gurts, das endseitig mit dem Gelenkarm 14 verbunden ist. Jedem Gelenkarm 14 ist hierbei eine Rolle 18 zugeordnet, wobei die Rollen 18 durch eine Welle 22 verbunden sind, die motorisch z. B. durch einen Rohrmotor angetrieben ist.

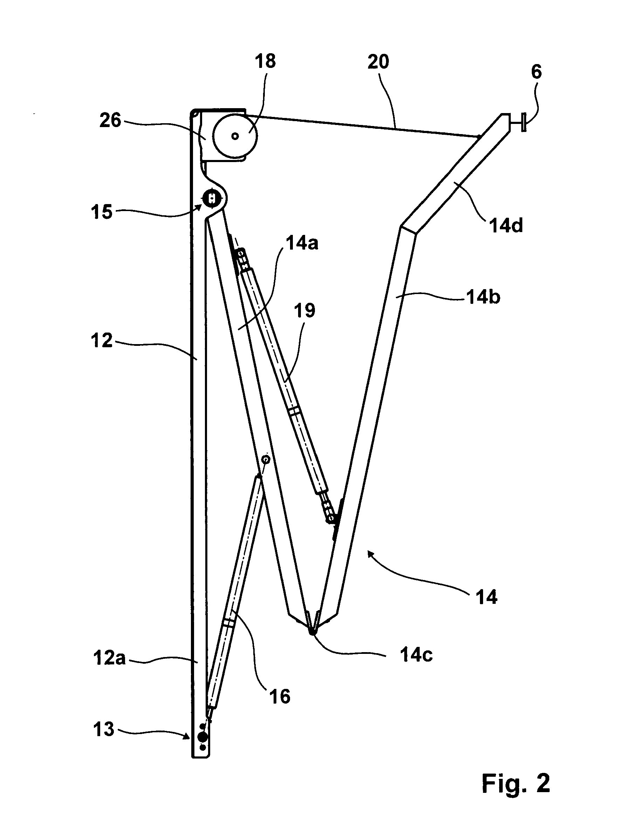

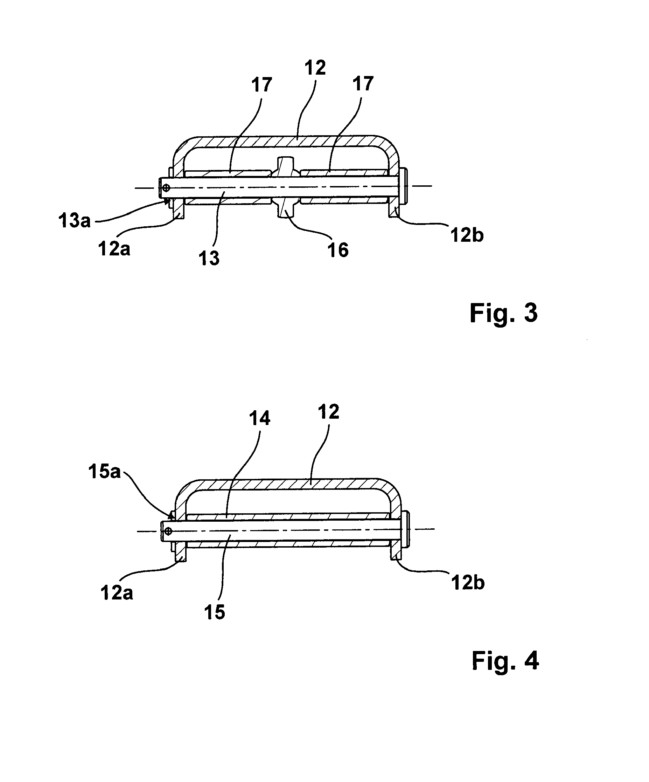

Am vorderen Ende der Gelenkarme befindet sich der flexible Rahmen 6 mit dem Bumper 8, der beim Anlegen des Vordaches 10 in Kontakt mit der Wandung des Flugzeuges gelangt. An dem flexiblen Rahmen 6 ist der Balg 5 mit seinem vorderen Ende befestigt. Im Bereich des Portals ist der Balg 5 mit dem Portalrahmen und/oder mit dem Träger 12 verbunden (Fig. 1). Gegenstand der Erfindung ist nun die Ausbildung des Trägers, wobei diesbzgl. im Einzelnen auf die Figuren 2 bis 4 verwiesen wird. Der Träger 12 ist im Querschnitt in etwa U-förmig ausgebildet, wie sich dies unmittelbar in Anschauung der Figuren 3 und 4 ergibt. Wie aus Fig. 3 erkennbar, weist der Träger 12 im Bereich der Schenkel 12a, 12b jeweils ein Auge 13a zur Aufnahme der mit 13 bezeichneten ersten unteren Gelenkachse auf. An der ersten unteren Gelenkachse 13 ist der untere Kolbenzylinderantrieb 16 angelenkt, wobei zu beiden Seiten des unteren Kolbenzylinderantriebs 16 jeweils eine Hülse 17 zur Mittenzentrierung des unteren Kolbenzylinderantriebs 16 vorgesehen ist.

Die Anbindung des Gelenkarmes 14 an dem Träger 12 ergibt sich in Anschauung von Fig. 4. Hierbei sind in den Schenkeln 12a, 12b des Trägers 12 wiederum Augen 15a zur Aufnahme einer zweiten oberen Gelenkachse 15 vorgesehen, wobei die zweite obere Gelenkachse den Gelenkarm 14 verschwenkbar aufnimmt.

Oberhalb der gelenkigen Anbindung des Gelenkarmes 14 an dem Träger 12 befindet sich ein Rollenbock 26 zur Aufnahme der Rolle 18. Die Rolle 18 steht über das Seil als Zugmittel 20 mit dem Ende des Gelenkarmes 14 in Verbindung (Fig. 2).

Der Gelenkarm 14 umfasst einen Oberarm 14a und einen Unterarm 14b, die durch ein Scharniergelenk 14c miteinander verbunden sind. Der Unterarm 14b zeigt darüber hinaus ein Endglied 14d auf, das relativ zum Unterarm 14b abgewinkelt ist. Zwischen Oberarm 14a und Unterarm 14 befindet sich ein weiterer Kolbenantrieb 19, der ebenso wie der Kolbenzylinderantrieb 16 der Ausstellbewegung des Gelenkarmes 14 dient.

**Bezugszeichenliste:**

| | |
|---|---|
| 1 | Fluggasttreppe oder -brücke |
| 3 | Portalrahmen |
| 4 | Schenkel des Portalrahmens |
| 5 | Balg |
| 6 | flexibler Rahmen |
| 8 | Bumper am flexiblen Rahmen |
| 9 | Betätigungseinrichtung |
| 10 | Vordach |
| 12 | Träger |
| 12a | Schenkel des Trägers 12 |
| 12b | Schenkel des Trägers 12 |
| 13 | erste untere Gelenkachse für den unteren Kolbenzylinderantrieb |
| 13a | Auge für Gelenkachse |
| 14 | Gelenkarm |
| 14a | Oberarm |
| 14b | Unterarm |
| 14c | Scharniergelenk |
| 14d | Endglied |
| 15 | zweite obere Gelenkachse für Gelenkarm |
| 15a | Auge für Gelenkachse |
| 16 | unterer Kolbenzylinderantrieb |
| 17 | Abstandshülsen |
| 18 | Rolle |
| 19 | oberer Kolbenzylinderantrieb |
| 20 | Zugmittel |
| 22 | Welle |
| 26 | Rollenbock |

## Patentansprüche

1. Fluggasttreppe oder Fluggastbrücke (1) mit einem stirnseitig an der Fluggasttreppe oder -brücke (1) angeordneten, in der Ansicht etwa U-förmigen Portalrahmen (3) zur Aufnahme eines Vordaches (10), wobei das Vordach mindestens einen Balg (5) und eine Betätigungseinrichtung (9) für den Balg umfasst,
**dadurch gekennzeichnet,**
**dass** zur Verbindung mindestens der Betätigungseinrichtung (9) des Vordaches (10) mit dem Portalrahmen (3) am Portalrahmen (3) eine Adaptereinrichtung angeordnet ist.

2. Fluggasttreppe oder Fluggastbrücke (1) nach Anspruch 1,
**dadurch gekennzeichnet,**
**dass** die Betätigungseinrichtung (9) mindestens zwei Gelenkarme (14) sowie mindestens einen einem jeden Gelenkarm (14) zugeordneten unteren Kolbenzylinderantrieb (16) aufweist.

3. Fluggasttreppe oder Fluggastbrücke (1) nach einem der voranstehenden Ansprüche,
**dadurch gekennzeichnet,**
**dass** die Adaptereinrichtung mindestens zwei Trager (12) aufweist, wobei jeweils mindestens ein Träger (12) an einem vertikal ausgerichteten Schenkel (4) des in der Ansicht in etwa U-förmigen Portalrahmens (3) angeordnet ist.

4. Fluggasttreppe oder Fluggastbrücke (1) nach Anspruch 3,
**dadurch gekennzeichnet,**
**dass** der Träger (12) im Querschnitt etwa U-förmig ausgebildet ist.

5. Fluggasttreppe oder Fluggastbrücke (1) nach Anspruch 3 oder 4,
**dadurch gekennzeichnet,**
**dass** der Träger (12) übereinander angeordnet mindestens eine erste untere und eine zweite obere Gelenkachse (13, 15) aufweist, wobei an der einen ersten unteren Gelenkachse (13) ein unterer Kolbenzylinderantrieb (16) und an der einen zweiten oberen Gelenkachse (15) ein Gelenkarm (14) angeordnet ist.

6. Fluggasttreppe oder Fluggastbrücke (1) nach einem der Ansprüche 3 bis 5,
**dadurch gekennzeichnet,**
**dass** der Träger (12) oberhalb der zweiten oberen Gelenkachse (15) eine Rolle (18) für ein Zugmittel (20) als Teil eines Antriebes für die Gelenkarme (14) aufweist.

7. Fluggasttreppe oder Fluggastbrücke (1) nach Anspruch 6,
**dadurch gekennzeichnet,**
**dass** die Rolle (18) antreibbar ist.

8. Fluggasttreppe oder Fluggastbrücke (1) nach Anspruch 6,
**dadurch gekennzeichnet,**
**dass** die Rollen (18) beider Träger (12) durch eine mit einem motorischen Antrieb versehene Welle (22) verbunden sind.

## Geänderte Patentansprüche

### Geänderte Patentansprüche gemäss Regel 137(2) EPÜ.

**1.** Fluggasttreppe oder Fluggastbrücke (1) mit einem stirnseitig an der Fluggasttreppe oder -brücke (1) angeordneten, in der Ansicht etwa U-förmigen Portalrahmen (3) und mit einem Vordach (10), wobei das Vordach mindestens einen Balg (5) und eine Betätigungseinrichtung (9) für den Balg umfasst,
**dadurch gekennzeichnet,**
**dass** zur Verbindung mindestens der Betätigungseinrichtung (9) des Vordaches (10) mit dem Portalrahmen (3) am Portalrahmen (3) eine Adaptereinrichtung angeordnet ist
wobei die Adaptereinrichtung mindestens zwei Träger (12) aufweist, wobei jeweils mindestens ein Träger (12) an einem vertikal ausgerichteten Schenkel (4) des in der Ansicht in etwa U-förmigen Portalrahmens (3) angeordnet ist,
wobei der Träger (12) übereinander angeordnet mindestens eine erste, untere und eine zweite, obere Gelenkachse (13, 15) aufweist, wobei an der einen ersten, unteren Gelenkachse (13) ein unterer Kolbenzylinderantrieb (16) und an der einen zweiten, oberen Gelenkachse (15) ein Gelenkarm (14) angeordnet ist.

**2.** Fluggasttreppe oder Fluggastbrücke (1) nach Anspruch 1,
**dadurch gekennzeichnet,**
**dass** die Betätigungseinrichtung (9) mindestens zwei Gelenkarme (14) sowie mindestens einen einem jeden Gelenkarm (14) zugeordneten unteren Kolbenzylinderantrieb (16) aufweist.

**3.** Fluggasttreppe oder Fluggastbrücke (1) nach einem der voranstehenden Ansprüche,
**dadurch gekennzeichnet,**
**dass** der Träger (12) im Querschnitt etwa U-förmig ausgebildet ist.

**4.** Fluggasttreppe oder Fluggastbrücke (1) nach einem der voranstehenden Ansprüche,
**dadurch gekennzeichnet,**
**dass** der Träger (12) oberhalb der zweiten oberen Gelenkachse (15) eine Rolle (18) für ein Zugmittel (20) als Teil eines Antriebes für die Gelenkarme (14) aufweist.

**5.** Fluggasttreppe oder Fluggastbrücke (1) nach Anspruch 4,
**dadurch gekennzeichnet,**
**dass** die Rolle (18) antreibbar ist.

**6.** Fluggasttreppe oder Fluggastbrücke (1) nach Anspruch 4,
**dadurch gekennzeichnet,**
**dass** die Rollen (18) beider Träger (12) durch eine mit einem motorischen Antrieb versehene Welle (22) verbunden sind.

**1.** Fluggasttreppe oder Fluggastbrücke (1) mit einem stirnseitig an der Fluggasttreppe oder -brücke (1) angeordneten, in der Ansicht etwa U-förmigen Portalrahmen (3) und mit einem Vordach (10), wobei das Vordach mindestens einen Balg (5) und eine Betätigungseinrichtung (9) für den Balg umfasst,
**dadurch gekennzeichnet,**
**dass** zur Verbindung mindestens der Betätigungseinrichtung (9) des Vordaches (10) mit dem Portalrahmen (3) am Portalrahmen (3) eine Adaptereinrichtung angeordnet ist.
